# EUROPÄISCHE PATENTSCHRIFT

(11) **EP 2 011 961 B1**
(45) Veröffentlichungstag und Bekanntmachung des Hinweises auf die Patenterteilung: **31.05.2017**
(21) Anmeldenummer: 08007080.8
(22) Anmeldetag: 10.04.2008
(51) Int. Cl.: E21C 35/197

(54) **Stellbares Schneidwerkzeug**
Adjustable cutting tool
Outil de coupe réglable

(30) Priorität: 02.07.2007 DE 102007030640
(43) Veröffentlichungstag der Anmeldung: 07.01.2009
(73) Patentinhaber: Wirtgen GmbH, 53578 Windhagen (DE)
(72) Erfinder: Lehnert, Thomas, 56587 Oberraden (DE); Abresch, Stefan, 56369 Dierdorf (DE); Lenz, Martin, 56276 Großmaischeid (DE); Hähn, Günter Dr., 53639 Königswinter (DE)
(74) Vertreter: Herrmann, Jochen

(56) Entgegenhaltungen:
- WO-A1-2005/005119
- WO-A1-2009/003561
- US-B1- 6 526 641

## Beschreibung

Die Erfindung betrifft ein Werkzeug für die Demontage eines Meißels an einem Meißelhalter mit einem Stellglied, das einen Abdrückabschnitt aufweist, wobei das Stellglied entlang einer Verfahrrichtung versetzbar ist.

Ein derartiges Werkzeug ist aus der WO 97/23710 bekannt. Dabei ist an einem Handgriff mittels einer Gelenkverbindung ein zapfenförmiger Abdrückabschnitt angekoppelt. Das Werkzeug wird zur Demontage eines Meißels verwendet, der in einer Aufnahmebohrung eines Meißelhalters eingesetzt ist. Die Aufnahmebohrung ist als Durchgangsbohrung ausgeführt, so dass ein Meißelschaft des eingesetzten Meißels rückseitig zugänglich ist. Auf dem Ende des Meißelschaftes ist ein Sicherungselement aufgezogen, das in einer Nut der Aufnahmebohrung gehalten ist und so den Meißel im Meißelhalter hält. Wenn der Meißel, beispielsweise bei Erreichen seiner Verschleißgrenze, ausgetauscht werden soll, dann wird der Abdrückabschnitt durch die rückseitige Öffnung in die Aufnahmebohrung eingeschoben und mit dem freien Ende des Meißelschaftes zur Anlage gebracht.

Der Handgriff kann dann verschwenkt werden, bis er an einem Stützabschnitt zur Anlage kommt. Nun lässt sich der Handgriff gegenüber dem Abdrückabschnitt in der Gelenkverbindung verstellen. Die dabei entstehenden Hebelkräfte werden über den Abdrückabschnitt derart in den Meißel eingebracht, dass die vom Sicherungselement bewirkte Sicherung aufgehoben wird. Wenn der Meißel demontiert und das Werkzeug entfernt ist, kann ein neuer, unverschlissener Meißel an die Aufnahmebohrung angesetzt und mit einem Hammer eingetrieben werden. Der Wechsel eines Meißels ist mit der bekannten Anordnung kraftaufwändig und bei beengten Platzverhältnissen nicht gefahrlos durchführbar.

Aus der DE 30 26 930 A1 sind weitere Demontagevorrichtungen bekannt. Diese benötigen einen Stößel, der im Bereich der Aufnahmebohrung für den Meißel montiert ist. Der Stößel lässt sich linear gegen das Schaftende des Meißels verfahren, so dass dieser aus der Aufnahmebohrung heraus bewegt werden kann. Für den Antrieb des Stößels kommen hydraulikbasierte Systeme oder mechanische Hebelsysteme zum Einsatz. Diese bekannten Werkzeuge benötigen viel Bauraum, der nicht immer bereitgehalten werden kann. Darüber hinaus gelangen während des Betriebseinsatzes Feinteile des abgetragenen Materials in die als Sackloch ausgeführte Aufnahmebohrung und können daraus nicht wieder austreten. Sie beeinträchtigen dann die Funktion der Demontagevorrichtung und die freie Drehbarkeit des Meißels im Einsatz.

Es sind weiterhin Werkzeuge bekannt, die eine Montage oder Demontage eines Meißels an seinem Meißelkopf vorschlagen. Beispielsweise zeigen die DE 43 23 669 C1, die DE 84 03 441 U1, die US 6,526,641 B1, die ein Werkzeug nach dem Oberbegriff des Anspruchs 1 offenbart, und die DE 32 23 761 C2 Klauenabzieher. Diese greifen mit verstellbaren Klauen in eine umlaufende Nut des Meißelkopfes ein. Die Klauen lassen sich dann zur Demontage in Längsrichtung des Meißels verstellen. Diese bekannten Werkzeuge benötigen stets eine Formfläche am Meißelkopf, die sie beim Ausziehen des Meißels hintergreifen können. Wenn infolge starken Meißelverschleißes diese Formfläche abgearbeitet oder der Meißelkopf abgebrochen ist, erweisen sich die Werkzeuge als wirkungslos.

Es ist Aufgabe der Erfindung, ein Werkzeug der eingangs erwähnten Art zu schaffen, das den Wechsel von Meißeln erheblich vereinfacht.

Diese Aufgabe wird durch ein Werkzeug gemäß Anspruch 1 gelöst. Während der Abdrückabschnitt zur Meißeldemontage verwendet wird, kann mit dem Einziehabschnitt der Meißel in die Montagestellung gebracht werden. Dies wird mit der Stelleinheit möglich, die das Stellglied bidirektional und somit in der Montage- und der Demontagerichtung verstellt. Das Stellglied ist mittels der Stelleinheit kraftbetätigbar, beispielsweise über einen Elektro- oder einen Hydraulikantrieb, so dass dem Anwender die Arbeit beim Meißelwechsel erheblich erleichtert ist. Das erfindungsgemäße Werkzeug kann somit sowohl die Montage als auch die Demontagearbeit ausführen.

Gemäß einer möglichen Erfindungsvariante kann es vorgesehen sein, dass das Stellglied zwischen dem Abdrückabschnitt und dem Einziehabschnitt einen quer zur Verfahrrichtung des Stellgliedes zugänglichen Aufnahmeabschnitt aufweist. Der Meißel kann mit einer angepassten Körperkontur in den Aufnahmeabschnitt leicht eingesetzt werden. Beispielsweise kann diese Körperkontur eine umlaufende Nut am Schaft des Meißels aufweisen, in die das Stellglied eingreift.

Wenn zudem vorgesehen ist, dass die Erstreckung des Aufnahmeabschnittes quer zur Vorschubrichtung kleiner oder gleich dem maximalen Querschnitt des Stellgliedes in dieser Richtung ist, dann überragt der Aufnahmeabschnitt das Stellglied quer zur Vorschubrichtung nicht. Dadurch kann eine kompakte Bauweise erreicht werden. Dies hat beispielsweise dann Vorteile, wenn ein Meißel durch eine Aufnahmebohrung, in der der Meißel gehalten ist, hindurch montiert und demontiert werden soll.

Um auf eine einfache Weise eine zentrierte Ausrichtung des Meißels an dem Werkzeug erreichen zu können, kann es vorgesehen sein, dass das Stellglied mit dem Abdrückabschnitt und dem Einziehabschnitt klauenartig ausgebildet ist, und dass mit dem Abdrückabschnitt und dem Einziehabschnitt eine bogen-, insbesondere teilkreisförmige, Einlegenut begrenzt ist. Der Meißel kann beispielsweise mit einem zylindrischen Bund in die Einlegenut eingesetzt werden.

Um hohe Montage- und insbesondere auch Demontagekräfte erzeugen zu können, sieht eine Erfindungsvariante vor, dass die Stelleinheit eine Hydraulikeinheit mit einem Hydraulikzylinder aufweist, in dem ein Kolben verstellbar ist, und dass das Stellglied über eine Kolbenstange an den Kolben angekoppelt ist. Dabei kann die Hydraulikeinheit eine Umsteuereinheit aufweisen, die eine bidirektionale Kraftbeaufschlagung des Kolbens ermöglicht.

Um ein einfach handhabbares Werkzeug verfügbar zu machen, sieht eine Erfindungsausgestaltung vor, dass die Hydraulikeinheit an einen Elektromotor angekoppelt ist, dass der Elektromotor an einen Akkumulator angeschlossen ist, und dass die Hydraulikeinheit, der Elektromotor und der Akkumulator in einer handbetätigbaren Baueinheit zusammengefasst sind. Das Werkzeug kann dann unabhängig von externen Energieversorgungen betrieben und somit einfach gehandhabt werden.

Die Montage- und die Demontage lässt sich zuverlässig durchführen, wenn zwischen dem Meißel und dem Stellglied ein Formschluss hergestellt wird. Zu diesem Zweck kann es erfindungsgemäß vorgesehen sein, dass die Stelleinheit zwei in entgegen gesetzten Richtungen weisende Stützflächen aufweist, die in Verfahrrichtung des Stellgliedes gerichtet sind.

Um sowohl bei der Montage als auch bei der Demontage eine feste und lagestabile Zuordnung des Montagwerkzeuges zu erhalten, kann es vorgesehen sein, dass die Stelleinheit zwei Stützteile aufweist, die in Verfahrrichtung zueinander beabstandet angeordnet sind. Mit diesen Stützteilen kann sich das Werkzeug dann an eigens dafür vorgesehenen Gegenflächen des Meißelhalters, etc. abstützen.

Für einen guten Bedienkomfort sollte das Stellglied in eine definierte Ausgangslage verfahrbar sein. Hierzu ist eine Erfindungsausgestaltung dadurch gekennzeichnet, dass die Stelleinheit einen Ausrichtabschnitt aufweist, an dem das Stellglied in seiner ein- und/oder ausgefahrenen Endstellung ausgerichtet ist.

Die Erfindung wird im Folgenden anhand eines in den Zeichnungen dargestellten Ausführungsbeispiels näher erläutert. Es zeigen:
- Fig. 1: in Seitenansicht und im Schnitt eine auf einem Fräswalzenrohr angeordnete Werkzeugeinheit,
- Fig. 2: die Darstellung gemäß Fig. 1 in Draufsicht,
- Fig. 3: die Werkzeugeinheit gem. Fig. 1 und 2 in einer vergrößerten Detailansicht und im Schnitt mit einem Werkzeug und am Ende der Demontagebewegung (Demontagestellung),
- Fig. 4: die Darstellung gem. Fig. 3 am Ende der Montagebewegung (Montagestellung) und
- Fig. 5: die Anordnung gem. Fig. 4 in Draufsicht.

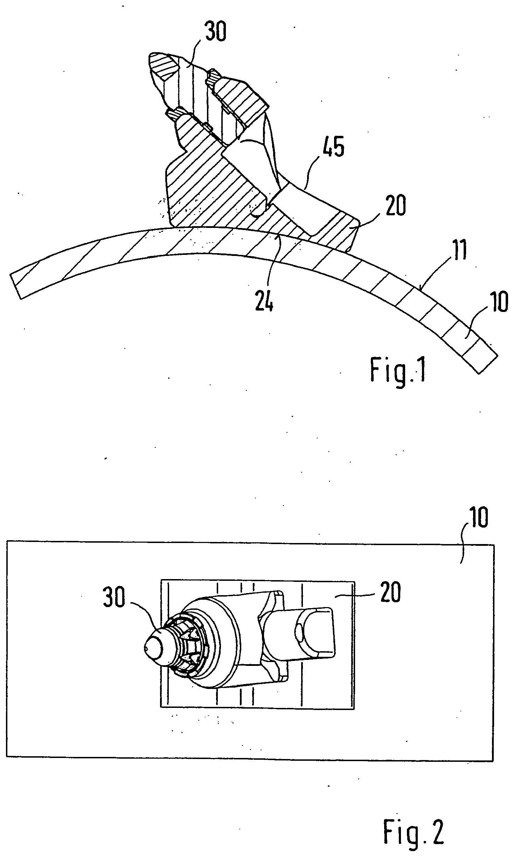

Wie die Fig. 1 zeigt, ist auf der Walzenoberfläche 11 eines Fräswalzenrohres 10 einer Gesteinsabtragmaschine, beispielsweise eines Surface Miners, einer Straßenfräsmaschine oder dergleichen, eine Werkzeugeinheit angebracht, insbesondere angeschweißt.

Von der gezeigten Werkzeugeinheit sind üblicher Weise eine Vielzahl verwendet, die in gleichmäßiger Beabstandung zueinander angeordnet sind.

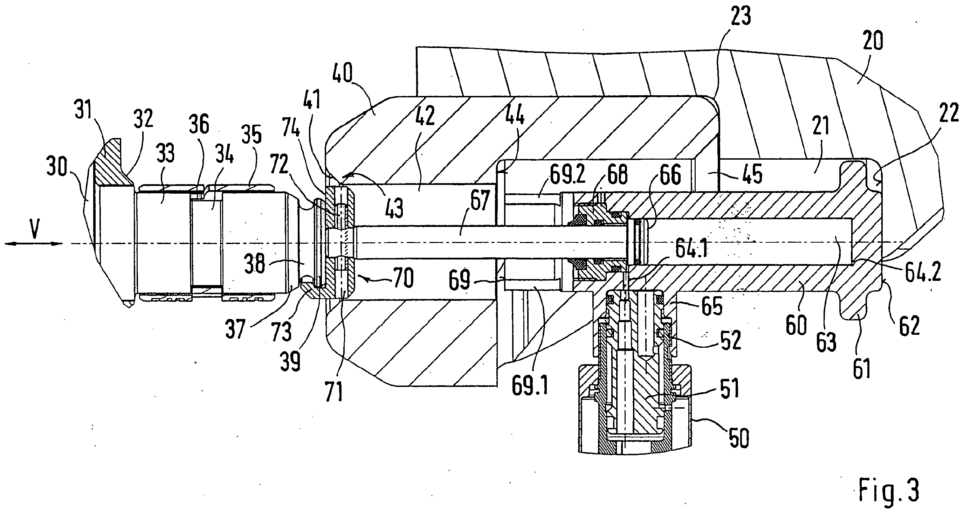

Die Werkzeugeinheit umfasst ein Basisteil 20, der mit einem konkaven Anlageabschnitt 24 aufgesetzt und auf der Walzenoberfläche 11 angeschweißt ist. Das Basisteil 20 besitzt eine Werkzeug-Aufnahme 21, in die ein Meißel 30, insbesondere ein Rundschaftmeißel, eingesetzt ist. Der Meißel 30 weist in üblicher Weise einen Meißelkopf und daran angeschlossen einen Meißelschaft 33 auf. Der Meißel 30 trägt im Bereich seines Meißelschaftes 33 eine Spannhülse 35, wie dies die Fig. 3 erkennen lässt. Die Spannhülse 35 greift mit Halteelementen 36 in eine umlaufende Nut 34 des Meißelschaftes 33 ein. Sie ist damit frei drehbar, jedoch in Axialrichtung unverlierbar gehalten.

Bei der Werkzeugausführung gemäß den Figuren 3 bis 5 ist im Montagezustand der Meißelkopf unter Zwischenlage einer Verschleißschutzscheibe 31 auf einer Stützfläche eines Meißelhalters 40 abgestützt. An seinem, dem Meißelkopf abgewandten Ende weist der Meißelschaft 33 ein Endstück auf, das nicht von der Spannhülse 35 überdeckt ist. Dieses Endstück bildet einen Bund 37, dessen Durchmesser kleiner ist, als der Durchmesser des übrigen Schaftbereiches. Der Bund 37 ist mit einer umlaufenden Nut 38 versehen. An die Nut 38 schließt ein zylindrisches Stützteil 39 an.

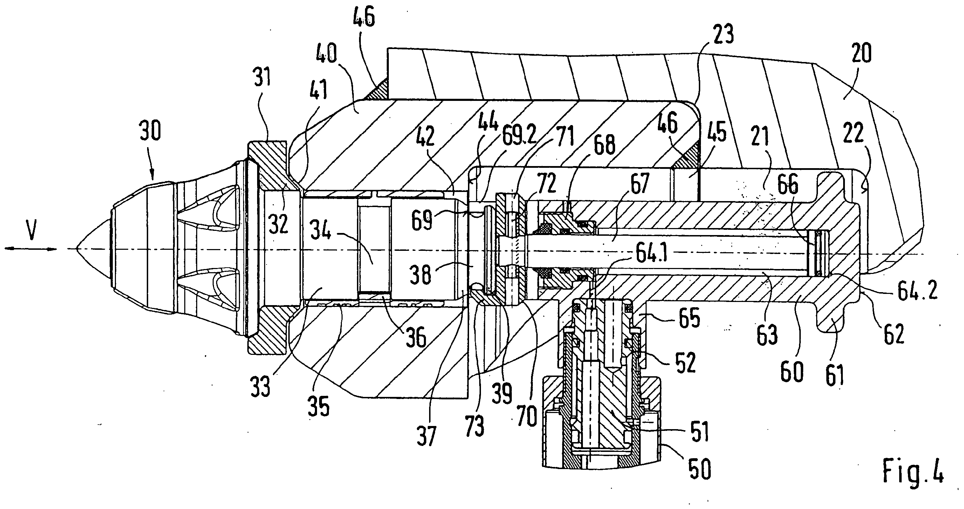

Der Meißelhalter 40 weist als Zentrieraufnahme 41 eine um die Meißelaufnahme 42 umlaufende Anfasung auf, die eine Einführöffnung 43 für den Meißel 30 begrenzt. Der Meißelhalter 40 kann in eine Meißelhalter-Aufnahme 23 des Basisteils 20 eingesetzt und mit dem Basisteil 20 fest verbunden, beispielsweise verschweißt, werden (siehe Schweißnähte 46 in Fig. 4). Im Verschleißfall können die Schweißnähte 46 aufgetrennt und der Meißelhalter 30 gegen eine neuen unverschlissenen ausgetauscht werden. Denkbar ist auch eine Werkzeugausführung, bei dem das Basisteil 20 und der Meißelhalter 30 als Baueinheit einteilig zusammengefasst sind (siehe Figur 1).

Wie die Fig. 3 und 4 und die Fig. 1 weiter erkennen lassen, bilden das Basisteil 20 und der Meißelhalter 40 einen taschenförmige, seitlich offene gemäß Fig. 1 zur Oberseite offene Ausbuchtung 45.

In diese Ausbuchtung 45 lässt sich ein Werkzeug einsetzen. Dieses lässt sich sowohl zur Montage als auch zur Demontage des Meißels 30 einsetzen.

Das Werkzeug weist eine Stelleinheit 60 auf, die einen zylinderförmigen Innenraum 63 umgibt. In dem Innenraum 63 ist ein Kolben 66 linear zwischen zwei Endstellungen geführt. Der Kolben 66 ist gegenüber der dem Innenraum begrenzenden Zylinderwandung mittels eines O-Ringes gedichtet. An den Kolben 66 ist eine Kolbenstange 67 angekoppelt, die durch einen Verschlusseinsatz 68 hindurch aus dem Innenraum 63 herausgeführt ist. Der Verschlusseinsatz 68 ist abgedichtet in die offene Seite der Stelleinheit 60 eingesetzt. Die Kolbenstange 67 ist ebenfalls gegenüber dem Verschlusseinsatz 68 abgedichtet, so dass sich ein druckdichter Innenraum 63 ergibt. Die Kolbenstange 67 trägt an ihrem freien, dem Kolben 66 abgewandten Ende ein Stellglied 70. Das Stellglied 70 ist mit einem durch eine Bohrung 71 des Stellgliedes 70 geschobenen Spannstift 72 daran befestigt. Das Stellglied 70 besitzt einen Einziehabschnitt 73 und einen Abdrückabschnitt 74. Diese stehen im Abstand zueinander, so dass sich eine Klaue ergibt. Der Abstand ist so gewählt, dass der Meißel 30 in die Klaue derart eingelegt werden kann, dass der Einziehabschnitt 73 in die Nut 38 eingreift.

Die Stelleinheit 60 weist an ihrem rückseitigen Ende einen Stützteil 61 auf, der von einer verbreiterten Kontur gebildet ist.

Eine endseitige plane Stützfläche 62 schließt die Stelleinheit 60 rückseitig ab, während auf der gegenüberliegenden Vorderseite eine Stützfläche 69 angeordnet ist. Diese Stützfläche 69 wird von einem vorderseitigen Stützteil 69.1 gebildet, das eine seitliche Ausnehmung 69.2 aufweist.

An einem Griffhalter 65 der Stelleinheit 60 ist ein Griff 50 mit einer batteriebetriebenen Hydraulikeinheit 51 angekoppelt. Da die Stromversorgung in den Griff 50 integriert ist, ergibt sich ein leicht handhabbares Werkzeug.

Die Hydraulikeinheit 51 steht über Hydraulikleitungen 64.1 und 64.2 mit dem Innenraum 63 in Verbindung. Der Innenraum 63 und die Hydraulikeinheit 51 sind mit einem Fluid, insbesondere Hydrauliköl, gefüllt.

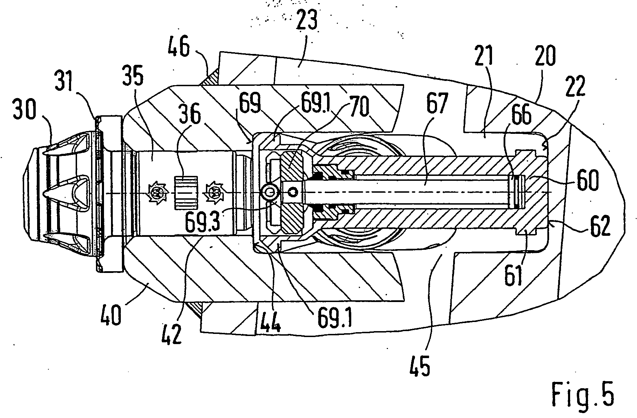

Unter Bezugnahme auf die Fig. 4 wird nachfolgend die Vorgehensweise zur Demontage des Meißels 30 aus der Meißelaufnahme 42 des Meißelhalters 40 beschrieben. Hierzu wird das Werkzeug in die Ausbuchtung 45 eingesetzt. Das Werkzeug zentriert sich dabei mit den Stützteilen 61 und 69.1 an Gegenflächen des Basisteils 20 beziehungsweise des Meißelhalters 40, so dass es ausgerichtet werden kann. Dabei begrenzt das Stützteil 61 und das Stellglied 70 die Einsetzbewegung, wobei das Steilglied 70 gegen den zylindrischen Stützteil 39 des Meißels 30 wirkt. Die Stützteile 61 und 69.1 (siehe Fig. 5) führen das Werkzeug senkrecht zur Einsetzbewegung.

Beim Einsetzen des Werkzeuges in die Ausbuchtung 45 ermöglicht eine Ausnehmung 69.2 im Stützteil 69.1 den Zugang zu dem Meißel 30 und der Einziehabschnitt 73 greift in die Nut 38 des Meißel 30 ein. In dieser Montagestellung kann die Hydraulikeinheit 51 aktiviert werden. Dabei wird Hydrauliköl durch die Hydraulikleitung 64.2 gefördert und dadurch der Kolben 66 in Richtung zum Meißel 30 hin axial verschoben. Gleichzeitig legt sich der ebene Ausdrückabschnitt 74 an das freie Ende des Meißels 30 an. Der Meißel 30 wird gegen die von der Spannhülse 35 aufgebrachte Reibkraft aus der Aufnahmebohrung 42 ausgeschoben. Bei diesem Vorgang stützt sich die Stelleinheit 60 mit ihrer Stützfläche 62 an der korrespondierenden Gegenfläche des Basisteils 20 ab, wie Fig. 3 zeigt. Die vorderseitige Stützfläche 69 ist dann freigestellt, was durch den mit 3 mm bemaßten Abstandsbereich gekennzeichnet ist. Die Ausschiebbewegung des Kolbens 66 ist an dem Verschlusseinsatz 68 begrenzt.

Dabei ist das Stellglied 70 so weit aus der Meißelaufnahme 42 ausgefahren, dass der Meißel 30 freigegeben ist und dieser abgenommen werden kann.

Nachfolgend wird die Vorgehensweise zur Montage eines Meißels 30 beschrieben.

Ausgehend von der in Fig. 3 gezeigten Stellung des Werkzeuges kann ein Meißel 30 mit seinem Stützteil 39 in die zwischen dem Einziehabschnitt 73 und dem Abdrückabschnitt 74 gebildeten Nutbereich des Stellgliedes 70 eingesetzt werden. Es ergibt sich die in Fig. 3 angegebene Positionierung. Die Hydraulik 51 kann mit einer Umschalteinrichtung 52 umgesteuert werden, so dass das Hydrauliköl über die Hydraulikleitung 64.1 in den Innenraum 63 gefördert und durch die Hydraulikleitung 64.2 aus diesem abgepumpt wird. Dadurch verschiebt sich der Kolben 66 in der Bildebene gemäß Fig. 3 von links nach rechts, bis er die in Fig. 4 gezeigte Endposition erreicht. Dabei wird der Meißel 30 mit dem am Stützteil 39 angreifenden Einziehabschnitt 73 in die Meißelaufnahme 42 eingezogen. Für eine erleichterte Montage fädelt das freie Ende des Meißels 30 sowie die Spannhülse 45 in die Zentrieraufnahme 41 ein. Dabei wir die längsgeschlitzte Spannhülse 35 umfangsmäßig komprimiert und unter Reibung an der die Meißelaufnahme 35 begrenzenden Innenwandung entlang gezogen, bis die in Fig. 4 gezeigte Endstellung erreicht ist. Beim Einziehen stützt sich das Stützteil 69.1 der Stelleinheit 60 an der Anlagefläche 44 des Meißelhalters 40 ab, während der Stützabschnitt 22 nun freigestellt ist. Im montierten Zustand greift die Verschleißschutzscheibe 31 des Meißels 30 mit einem Zentriereinsatz 32 in die Zentrieraufnahme 41 ein.

Wenn der Meißel 30 eingezogen ist, dann kann das Werkzeug aus der Werkzeug-Aufnahme 21 herausgehoben werden. Um zu verhindern, dass sich das Stellglied 70 gegenüber der Stelleinheit 60 verdreht, ist das Stellglied 70 in der in Fig. 5 gezeigten Position in Umfangsrichtung unverdrehbar an einem Anschlag der Stelleinheit 60 ausgerichtet (Ausrichtabschnitt 69.3).

## Patentansprüche

1. Werkzeug für die Montage und die Demontage eines Meißels (30) an, beziehungsweise aus einem Meißelhalter (40) mit einem Stellglied (70), das einen Abdrückabschnitt (74) aufweist, wobei das Stellglied (70) entlang einer Verfahrrichtung (V) versetzbar ist, wobei das Stellglied (70) mittels einer Stelleinheit (60) versetzbar ist,
**dadurch gekennzeichnet,**
**dass** das Stellglied (70) einen Einziehabschnitt (73) aufweist, der im Abstand zu dem Abdrückabschnitt (74) steht und der quer zur Verfahrrichtung (V) des Stellgliedes (70) angeordnet ist, und
**dass** das Stellglied (70) in Verfahrrichtung (V) mittels der Stelleinheit (60) bidirektional kraftbetätigbar ist und dazu ausgebildet ist:
a. durch das Einziehen des Meißels (30) in eine Meißelaufnahme (42) eines Meißelhalters (40) mittels des Einziehabschnittes (73) den Meißel (30) zu montieren;
sowie
b. durch das Abdrücken des Meißels (30) aus der Meißelaufnahme (42) des Meißelhalters (40) heraus mittels des Abdrückabschnittes (74) den Meißel (30) zu demontieren.

2. Werkzeug nach Anspruch 1,
**dadurch gekennzeichnet,**
**dass** das Stellglied (70) zwischen dem Abdrückabschnitt (74) und dem Einziehabschnitt (73) einen quer zur Verfahrrichtung (V) des Stellgliedes (70) zugänglichen Aufnahmeabschnitt aufweist.

3. Werkzeug nach Anspruch 2,
**dadurch gekennzeichnet,**
**dass** die Erstreckung des Aufnahmeabschnittes quer zur Vorschubrichtung kleiner oder gleich dem maximalen Querschnitt des Stellgliedes (70) in dieser Richtung ist.

4. Werkzeug nach einem der Ansprüche 1 bis 3,
**dadurch gekennzeichnet,**
**dass** das Stellglied (70) mit dem Abdrückabschnitt (74) und dem Einziehabschnitt (73) klauenartig ausgebildet ist, und
**dass** mit dem Abdrückabschnitt (74) und dem Einziehabschnitt (73) eine bogen-, insbesondere teilkreisförmige, Einlegenut begrenzt ist.

5. Werkzeug nach einem der Ansprüche 1 bis 4,
**dadurch gekennzeichnet,**
**dass** die Stelleinheit (70) eine Hydraulikeinheit (51) mit einem Hydraulikzylinder aufweist, in dem ein Kolben (66) verstellbar ist, und dass das Stellglied (70) über eine Kolbenstange (67) an den Kolben (66) angekoppelt ist.

6. Werkzeug nach Anspruch 5,
**dadurch gekennzeichnet,**
**dass** die Hydraulikeinheit (51) an einen Elektromotor angekoppelt ist, dass der Elektromotor an einen Akkumulator angeschlossen ist, und dass die Hydraulikeinheit (51), der Elektromotor und der Akkumulator in einer handbetätigbaren Baueinheit zusammengefasst sind.

7. Werkzeug nach einem der Ansprüche 1 bis 6,
**dadurch gekennzeichnet,**
**dass** die Stelleinheit (60) zwei in entgegen gesetzte Richtungen weisende Stützflächen (62 und 69) aufeist, die in Verfahrrichtung (V) des Stellgliedes (70) gerichtet sind.

8. Werkzeug nach einem der Ansprüche 1 bis 7,
**dadurch gekennzeichnet,**
**dass** die Stelleinheit (60) zwei Stützteile (61, 69.1) aufweist, die in Verfahrrichtung (V) zueinander beabstandet angeordnet sind.

9. Werkzeug nach einem der Ansprüche 1 bis 8,
**dadurch gekennzeichnet,**
**dass** die Stelleinheit (60) einen Ausrichtabschnitt (69.3) aufweist, an dem das Stellglied (70) in seiner ein- und/oder ausgefahrenen Endstellung ausgerichtet ist.

## Claims

1. A tool for the assembly and the disassembly of a chisel (30) on or from a chisel holder (40) with an actuator (70), which has a pushing-out section (74), wherein the actuator (70) is displaceable along a traversing direction (V), wherein the actuator (70) is displaceable by means of a setting unit (60),
**characterized in**
**that** the actuator (70) has a pulling-in section (73), which is at a distance to the pushing-out section (74) and which is arranged transversely to the traversing direction (V) of the actuator (70), and
**that** the actuator (70) can be power-actuated bi-directionally by means of the setting unit (60) in the traversing direction (V) and is designed:
a. to assemble the chisel (30) by pulling the chisel (30) into a chisel receptacle (42) of a chisel holder (40) by means of the pulling-in section (73);
as well as
b. to disassemble the chisel (30) by pushing the chisel (30) out of the chisel receptacle (42) of the chisel holder (40) by means of the pushing-out section (74).

2. A tool according to Claim 1,
**characterized in**
**that** between the pushing-out section (74) and the pulling-in section (73) the actuator (70) has a receiving section accessible transversely to the traversing direction (V) of the actuator (70).

3. A tool according to Claim 2,
**characterized in**
**that** the extension of the receiving section transversely to the feed direction is less than or equal to the maximum cross section of the actuator (70) in this direction.

4. A tool according to any one of Claims 1 to 3,
**characterized in**
**that** the actuator (70) with the pushing-out section (74) and the pulling-in section (73) is designed to be claw-like, and that with the pushing-out section (74) and the pulling-in section (73) an arch-shaped, in particular part-circular, insertion groove is defined.

5. A tool according to any one of Claims 1 to 4,
**characterized in**
**that** the setting unit (70) has a hydraulic unit (51) with a hydraulic cylinder, in which a piston (66) is adjustable, and
**that** the actuator (70) is coupled to the piston (66) by means of a piston rod (67).

6. A tool according to Claim 5
**characterized in**
**that** the hydraulic unit (51) is coupled to an electric motor,
**that** the electric motor is connected to an accumulator, and
**that** the hydraulic unit (51), the electric motor and the accumulator are combined in a manually operable assembly.

7. A tool according to any one of Claims 1 to 6,
**characterized in**
**that** the setting unit (60) has two supporting surfaces (62 and 69) pointing in opposite directions, which are directed in the traversing direction (V) of the actuator (70).

8. A tool according to any one of Claims 1 to 7,
**characterized in**
**that** the setting unit (60) has two supporting members (61, 69.1), which are arranged spaced apart from one another in the traversing direction (V).

9. A tool according to any one of Claims 1 to 8,
**characterized in**
**that** the setting unit (60) has an aligning section (69.3), to which the actuator (70) is aligned in its retracted and/or extended end position.

## Revendications

1. Outil pour le montage et le démontage d'un burin (30) sur ou hors d'un support de burin (40) avec un organe de réglage (70) qui comprend une portion de pression (74), l'organe de réglage (70) pouvant être déplacé le long d'une direction de déplacement (V), l'organe de réglage (70) pouvant être déplacé au moyen d'une unité de réglage (60),
**caractérisé en ce que**
l'organe de réglage (70) comprend une portion d'insertion (73) qui est disposée à une certaine distance de la portion de pression (74) et qui est disposée transversalement par rapport à la direction de déplacement (V) de l'organe de réglage (70) et
l'organe de réglage (70) peut être poussée de manière bidirectionnelle dans la direction de déplacement (V) au moyen de l'unité de réglage (60) et est conçu :
a. pour monter le burin (30) grâce à l'insertion du burin (30) dans un logement de burin (42) d'un support de burin (40) au moyen de la portion d'insertion (73) ;
et
b. pour démonter le burin (30) grâce à la pression du burin (30) hors du logement de burin (42) du support de burin (40) au moyen de la portion de pression (74).

2. Outil selon la revendication 1,
**caractérisé en ce que**
l'organe réglage (70) comprend, entre la portion de pression (74) et la portion d'insertion (73), une portion de logement accessible transversalement par rapport à la direction de déplacement (V) de l'organe de réglage (70).

3. Outil selon la revendication 2,
**caractérisé en ce que**
l'extension de la portion de logement transversalement par rapport à la direction d'avance est inférieure ou égale à la section maximale de l'organe de réglage (70) dans cette direction.

4. Outil selon l'une des revendications 1 à 3,
**caractérisé en ce que**
l'organe de réglage (70) avec la portion de pression (74) et la portion d'insertion (73) est conçu sous la forme de griffes et
la portion de pression (74) et la portion d'insertion (73) délimitent une rainure d'insertion présentant la forme d'un arc de cercle, plus particulièrement une forme partiellement circulaire.

5. Outil selon l'une des revendications 1 à 4,
**caractérisé en ce que**
l'unité de réglage (70) comprend une unité hydraulique (51) avec un cylindre hydraulique, dans lequel un piston (66) est mobile et
l'organe de réglage (70) est couplé au piston (66) par l'intermédiaire d'une tige de piston (67).

6. Outil selon la revendication 5,
**caractérisé en ce que**
l'unité hydraulique (51) est couplée à un moteur électrique,
le moteur électrique est raccordé à un accumulateur et
l'unité hydraulique (51), le moteur électrique et l'accumulateur sont regroupés dans un sous-ensemble pouvant être actionné manuellement.

7. Outil selon l'une des revendications 1 à 6,
**caractérisé en ce que**
l'unité de réglage (60) comprend deux surfaces d'appui (62 et 69) orientées dans des directions opposées, qui sont alignées avec la direction de déplacement (V) de l'organe de réglage (70).

8. Outil selon l'une des revendications 1 à 7,
**caractérisé en ce que**
l'unité de réglage (60) comprend deux parties d'appui (61, 69.1) qui sont disposées à une certaine distance entre elles dans la direction de déplacement (V).

9. Outil selon l'une des revendications 1 à 8,
**caractérisé en ce que**
l'unité de réglage (60) comprend une portion d'alignement (69.3) avec laquelle l'organe de réglage (70) est aligné dans sa position finale rentrée et/ou sortie.
